# EUROPEAN PATENT APPLICATION

(11) **EP 4 787 169 A1**
(43) Date of publication of application: **05.08.2026**
(21) Application number: 24876642.0
(22) Date of filing: 11.10.2024
(51) Int. Cl.: G06F 11/36

(54) **PROGRAM DEBUGGING METHOD, DEBUGGER AND COMPUTING DEVICE**

(30) Priority: 13.10.2023 CN 202311329334
(71) Applicant: HUAWEI TECHNOLOGIES CO., LTD., Shenzhen 518129 (CN)
(72) Inventor: LUO, Jinxin, Shenzhen, Guangdong 518129 (CN); YANG, Zheng, Shenzhen, Guangdong 518129 (CN); YUAN, Chao, Shenzhen, Guangdong 518129 (CN)
(74) Representative: Thun, Clemens
(86) International application number: PCT/CN2024/124161
(87) International publication number: WO 2025/077832

(57) **Abstract**

This application discloses a program debugging method, a debugger, and a compute device. The debugger determines that next program code of step-in is first glue code, where the first glue code is first-layer code in glue code between a first function and a second function, the first function calls the second function, and the first function and the second function are separately obtained through compilation by using different compiled languages; the debugger determines that the second function is a breakpoint of a program; and the debugger continuously executes the program to the breakpoint. For an operation step of a developer, after the first function is entered, the second function is reached. Because the glue code between the first function and the second function automatically runs in the program, the developer does not perceive a running process of the glue code, and does not need to manually operate each function for running the glue code either. This improves program debugging efficiency.

## Description

This application claims priority to Chinese Patent Application No. 202311329334.9, filed with the China National Intellectual Property Administration on October 13, 2023 and entitled "PROGRAM DEBUGGING METHOD, DEBUGGER, AND COMPUTE DEVICE", which is incorporated herein by reference in its entirety.

### TECHNICAL FIELD

This application relates to the field of computer technologies, and in particular, to a program debugging method, a debugger, and a compute device.

### BACKGROUND

A debugger, as an important part of a programming language, is a tool for diagnosing and fixing a code error (or referred to as a bug). The debugger allows a developer to view and analyze code status and behavior step by step during program execution. The debugger may help the developer diagnose and fix the code error, understand program behavior, and optimize performance. For programming developers, the debugger is a powerful tool that can effectively improve development efficiency and code quality.

Many programming languages support cross-language interoperation. If a programming language includes a runtime (runtime) system, before cross-language calling is performed, some runtime-related processing, for example, scheduling or garbage collection (garbage collection, GC), needs to be performed by using glue code. In other words, some additional code (namely, glue code) is inserted between a function (Native Func) for performing cross-language calling and a target function (Foreign Func).

Because the glue code is inserted between the Native Func and the Foreign Func, the debugger cannot directly reach the Foreign Func through step-in (namely, step-in) in the Native Func during debugging. The debugger needs to traverse functions (including subfunctions) at each layer of the glue code through step-in, to enter the Foreign Func through functions at the last layer of the glue code through step-in. Therefore, a debugging process is complex.

### SUMMARY

This application provides a program debugging method, a debugger, and a compute device, to improve program debugging efficiency.

According to a first aspect, this application provides a program debugging method. In a process of debugging a program by using a debugger, a developer usually chooses to manually step into (namely, step-in) functions (including glue code) at each layer of the program by using the debugger, to help the program developer view and analyze code status and behavior step by step during program execution, so as to help the developer diagnose and fix a code error, understand behavior of the program, and optimize performance. If step-in/step-out is continuously executed a plurality of times in the glue code, program debugging efficiency is greatly reduced.

In this application, the debugger can identify and determine the glue code in the program. Specifically, in this application, a first function is a caller function, and a second function is a callee function. The first function and the second function are obtained through compilation by using different compiled languages. For example, the first function is compiled by using a Go language, and the second function is compiled by using a C language. In this case, in a static compilation phase of the program, glue code needs to be written between the first function and the second function. First glue code in this application is first-layer code in the glue code between the first function and the second function. Therefore, in this application, when the debugger prepares to execute a step-in operation on next program code in the program, the debugger can identify and determine in time that the next program code of the program is the first glue code (the first-layer code in the glue code).

Regardless of how the glue code is implemented, the second function needs to be finally called. Therefore, the debugger sets the second function as a breakpoint of the program. After the breakpoint is set, the debugger enables the program to run automatically. When the program runs to a specified breakpoint position, the program is suspended at the breakpoint position.

If the debugger sets the second function as the breakpoint of the program, the debugger no longer executes step-in, but continuously executes the program to the set breakpoint. In the glue code between the first function and the second function, because the debugger does not execute step-in, the debugger does not enter a function (including a subfunction) of the glue code, and the developer does not need to manually operate a step-in command (step-in command) on the debugger. The program automatically runs until the breakpoint position (namely, the second function) is reached. Therefore, for an operation step of the developer, after the first function is entered, the second function is reached. Because the glue code between the first function and the second function automatically runs in the program, the developer does not perceive a running process of the glue code, and does not need to manually operate each function for running the glue code either. This improves program debugging efficiency.

According to the first aspect, in an optional implementation, the program debugging method in this application may also be applied to returning from the callee function (the second function) to the caller function (the first function). It can be learned from the foregoing that, in a static compilation phase of the program, the glue code needs to be written between the first function and the second function. The first glue code is the first-layer code in the glue code between the first function and the second function, and second glue code in this application is last-layer code in the glue code between the first function and the second function. Therefore, in this application, when the debugger prepares to execute a step-out operation on next program code in the program, the debugger can identify and determine in time that the next program code of the program is the second glue code (the last-layer code in the glue code).

Because subsequent to-be-executed code of the program is the glue code, in this application, the debugger may automatically execute N consecutive times of step-out on the program until the first function is returned, where N is an integer greater than or equal to 2. Therefore, the developer does not need to manually initiate a step-out (step-out) operation on each layer of glue code in an operation interface of the debugger, thereby improving program debugging efficiency.

According to the first aspect, in an optional implementation, content of the glue code is written into the program in advance in the static compilation phase. Therefore, a function name of the glue code is predictable. For example, in the glue code, a name of a first-layer function and a name of a last-layer function are predictable. In this application, the debugger may first obtain the function name of the glue code (including a function name of the first glue code). When a function name corresponding to next program code of step-in (namely, step-in) of the debugger matches the function name of the first glue code, the debugger determines that the next program code of the program step-in is the first glue code.

According to the first aspect, in an optional implementation, in the glue code, the name of the first-layer function and the name of the last-layer function are predictable. In this application, the debugger may first obtain the function name of the glue code (including a function name of the second glue code). When a function name corresponding to next program code of step-out (namely, step-out) of the debugger matches the function name of the second glue code, the debugger determines that the next program code of the program step-out is the second glue code.

According to the first aspect, in an optional implementation, in a process in which the debugger executes N times of step-out to reach the first function, N-1 times of step-out in the glue code is first executed. In other words, the debugger executes, starting from the second function, N-1 consecutive times of step-out on the program until the first glue code is reached. Then, after executing one time of step-out at a position of the first glue code, the debugger can reach the first function.

According to the first aspect, in an optional implementation, the debugger executes N-1 consecutive times of step-out on the program. If a function name corresponding to a current to-be-executed instruction matches a function name of the first glue code, the debugger may determine that the first glue code has been returned.

According to the first aspect, in an optional implementation, to set the second function as the breakpoint of the program, the debugger needs to obtain an address (namely, a target address) at which the second function is stored. After obtaining the target address of the second function, the debugger sets the second function as the breakpoint by using the target address.

According to the first aspect, in an optional implementation, the target address of the second function is stored on a stack. In this case, the debugger obtains a stack pointer (Stack Pointer, SP), and the target address is an address indicated by the stack pointer and an offset. The second function may be obtained from the target address on the stack.

According to the first aspect, in an optional implementation, the target address of the second function is stored in a target variable. The debugger obtains the target variable, where a variable value of the target variable includes the target address of the second function.

According to a second aspect, this application provides a debugger. The debugger includes:
a determining unit, configured to determine that next program code of step-in is first glue code, where the first glue code is first-layer code in glue code between a first function and a second function, the first function calls the second function, and the first function and the second function are separately obtained through compilation by using different compiled languages, where
the determining unit is further configured to determine that the second function is a breakpoint of a program; and
an execution unit, configured to continuously execute the program to the breakpoint.

According to the second aspect, in an optional implementation, the determining unit is further configured to determine that next program code of step-out is second glue code, where the second glue code is last-layer code in the glue code between the first function and the second function.

The execution unit is further configured to execute N consecutive times of step-out on the program until the first function is returned, where N is an integer greater than or equal to 2.

According to the second aspect, in an optional implementation, the determining unit is specifically configured to:
when a function name corresponding to the next program code of step-in matches a function name of the first glue code, determine that the next program code of step-in is the first glue code.

According to the second aspect, in an optional implementation, the determining unit is specifically configured to:
when a function name corresponding to the next program code of step-out matches a function name of the second glue code, determine, by the debugger, that the next program code of step-out is the second glue code.

According to the second aspect, in an optional implementation, the execution unit is specifically configured to:
execute N-1 consecutive times of step-out on the program until the first glue code is reached; and
execute one time of step-out based on the first glue code, to return to the first function.

According to the second aspect, in an optional implementation, the execution unit is specifically configured to:
execute the N-1 consecutive times of step-out on the program; and
when a function name corresponding to a current to-be-executed instruction matches a function name of the first glue code, determine that the first glue code is reached.

According to the second aspect, in an optional implementation, the debugger further includes:
an obtaining unit, configured to obtain a target address of the second function, where the target address is used by the debugger to determine that the second function is the breakpoint.

According to the second aspect, in an optional implementation, the obtaining unit is specifically configured to:
obtain a stack pointer SP; and
determine the target address of the second function based on an indication of the SP.

According to the second aspect, in an optional implementation, the obtaining unit is specifically configured to:
obtain a target variable, where a variable value of the target variable includes the target address of the second function.

Content such as information exchange and execution processes in the embodiment shown in this aspect is based on a same concept as the embodiment shown in the first aspect. Therefore, for detailed descriptions of beneficial effects shown in this aspect, refer to the first aspect. Details are not described herein again.

According to a third aspect, an embodiment of this application provides a compute device, including a processor. The processor is coupled to a memory, the memory is configured to store instructions, and when the instructions are executed by the processor, the compute device is enabled to implement the method in any one of the first aspect or the possible implementations of the first aspect.

According to a fourth aspect, an embodiment of this application provides a computer-readable storage medium. The computer-readable storage medium stores instructions. When the instructions are executed, a computer is enabled to perform the method in any one of the first aspect or the possible implementations of the first aspect.

According to a fifth aspect, an embodiment of this application provides a computer program product. The computer program product includes computer program code. When the computer program code is run on a computer, the computer is enabled to perform the method in any one of the first aspect or the possible implementations of the first aspect.

According to a sixth aspect, an embodiment of this application provides a chip, including a processor. The processor is coupled to a memory, the memory is configured to store instructions, and when the instructions are executed by the processor, the chip is enabled to implement the method in any one of the first aspect and the possible implementations of the first aspect.

### BRIEF DESCRIPTION OF DRAWINGS

To describe the technical solutions in embodiments of this application or in the conventional technology more clearly, the following briefly describes the accompanying drawings required for describing embodiments or the conventional technology. It is clear that the accompanying drawings in the following descriptions show merely embodiments of this application, and a person of ordinary skill in the art may still derive other drawings from these accompanying drawings without creative efforts.
FIG. 1 is a schematic flowchart in which a debugger enters glue code through step-in;
FIG. 2 is a schematic flowchart in which a debugger executes step-out in glue code;
FIG. 3 is a diagram of a scenario in which a debugger processes glue code in the conventional technology;
FIG. 4 is a diagram of a scenario in which a debugger processes glue code according to an embodiment of this application;
FIG. 5 is a schematic flowchart of a program debugging method according to an embodiment of this application;
FIG. 6 is another schematic flowchart of a program debugging method according to an embodiment of this application;
FIG. 7 is a diagram of a structure of a debugger according to an embodiment of this application; and
FIG. 8 is a diagram of a logical structure of a compute device according to an embodiment of this application.

### DESCRIPTION OF EMBODIMENTS

Embodiments of this application provide a program debugging method, a debugger, and a compute device, to improve program debugging efficiency.

The following describes embodiments of this application with reference to the accompanying drawings in embodiments of this application. Terms used in implementations of this application are merely used for explaining specific embodiments of this application, and are not intended to limit embodiments of this application. It can be learned by a person of ordinary skill in the art that the technical solutions provided in embodiments of this application are also applicable to similar technical problems with development of technologies and emergence of a new scenario.

In embodiments of this application, "at least one" means one or more, and "a plurality of" means two or more. The term "and/or" describes an association relationship between associated objects, and indicates that three relationships may exist. For example, A and/or B may represent the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate: a, b, c, "a and b", "a and c", "b and c", or "a, b, and c", where a, b, and c may be singular or plural.

In the specification, claims, and accompanying drawings of this application, terms "first", "second", "third", "fourth", and the like (if existent) are intended to distinguish between similar objects but do not necessarily indicate a specific order or sequence. It should be understood that data used in such a way is interchangeable in proper circumstances, so that embodiments of this application described herein can be implemented, for example, in an order other than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following explains some nouns or terms used in embodiments of this application, and the nouns or terms also serve as a part of content of the present invention.

Runtime: The runtime is a running environment of an object-oriented programming language (object-oriented programming). The runtime indicates which program is running in a specific period of time. The runtime is a phase in a running lifecycle of a computer program, and other phases further include compile-time, link-time, and load-time.

Glue code: In computer programming, the glue code is executable code (usually source code) used only to "adjust" different parts of code. Otherwise, the code is incompatible.

Native Func: Native Func is a function that calls a target language function during cross-language interoperation.

Foreign Func: Foreign Func is a function of a target language that is called during cross-language interoperation.

Step-in: During debugging, a debugger steps into a subfunction from a current position (usually a source code line in which a function is called).

Step-out: During debugging, the debugger returns to a parent function from the current position.

Breakpoint: During debugging, the debugger can perform operations, for example, observing memory content, on a debugged process only when the debugged process is suspended. If the debugged process does not stop, the debugger cannot do anything. The only way to stop the debugged process is to cause an exception, except for several debugging events that occur at specific moments. The breakpoint is an exception used to achieve the preceding purpose. Although the breakpoint is an exception, it does not mean that the debugged process is faulty. The breakpoint is only a method for debugging. Therefore, the debugger distinguishes the breakpoint (breakpoint exception) from other exceptions.

Stack pointer (Stack Pointer, SP) register: The SP register is a special register, and is configured to store a stack address during program running. During program running, operations such as function calling and interrupt handling need to push data into and eject data from a stack. The SP register is configured to store an address pointer of the stack to ensure normal program running. The SP register is a part of a central processing unit (Central Processing Unit, CPU), and is stored in a control register of the CPU. The SP register provides the following two functions: one is to store the stack pointer, and the other is to manage stack space. When data needs to be pushed into the stack, the program automatically stores the data in the stack and moves the SP pointer downward for storage of next data. Similarly, when data needs to be ejected, the program fetches the data from the stack and moves the SP pointer upward for fetching of next data.

A debugger, as an important part of a programming language, is a tool for diagnosing and fixing a code error (or referred to as a bug). The debugger allows a developer to view and analyze code status and behavior step by step during program execution. The debugger may help the developer diagnose and fix the code error, understand program behavior, and optimize performance. For programming developers, the debugger is a powerful tool that can effectively improve development efficiency and code quality.

Many programming languages support cross-language interoperation. If a programming language includes a runtime (runtime) system, before cross-language calling is performed, some runtime-related processing, for example, scheduling or garbage collection (garbage collection, GC), needs to be performed by using glue code. In other words, some additional code (namely, glue code) is inserted between a function (Native Func) for performing cross-language calling and a target function (Foreign Func).

The glue code is inserted between the Native Func and the Foreign Func. The debugger performs an execution based on code logic during debugging, and a glue layer is code logic. Therefore, the debugger cannot directly reach the Foreign Func through step-in (namely, step-in) in the Native Func during debugging. The debugger needs to traverse functions (including subfunctions) at each layer of the glue code through step-in, to enter the Foreign Func through functions at the last layer of the glue code through step-in. In addition, when the debugger needs to reach the Native Func through step-out from the functions at the last layer of the glue code, the developer also needs to manually click a step-out instruction in a debugger interface, so that the debugger reaches, through the functions at each layer of the glue code, the Native Func through step-out from the functions at the last layer of the glue code.

A Go language is used as an example. A main function main (namely, Native Func) of Go code calls a function add (namely, Foreign Func) of a C language across languages. Details are as follows.

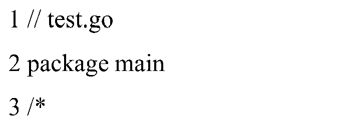

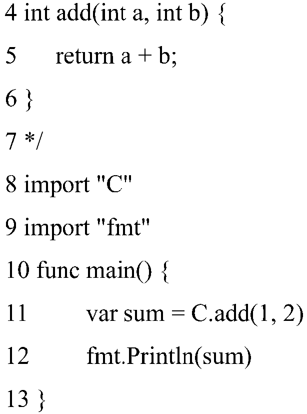

In this case, because var sum = C.add(1, 2), the main function main of the Go code calls the function add of the C language across languages. Therefore, six layers of glue code that a user does not care about are inserted into a call stack of a main program. Details are as follows:

```
          (lldb) bt
          * thread #1, name = 'test', stop reason = breakpoint 1.1
           * frame #0: 0x000000000047f810 test`add
             frame #1: 0x000000000047f839 test`_cgo_45f8faab1e14_Cfunc_add + 25
             frame #2: 0x000000000045bc50 test`runtime.asmcgocall.abi0 + 112
             frame #3: 0x0000000000459da9 test`runtime.systemstack.abi0 + 73
             frame #4: 0x000000000045e449 test`runtime.newproc.abi0 + 41
             frame #5: 0x00000000004801d0 test`crosscall_amd64 + 34
             frame #6: 0x000000000047f6ac test`main._Cfunc_add.abi0 + 76
             frame #7: 0x000000000047f76b test`main.main + 43
             frame #8: 0x00000000004332e7 test`runtime.main + 551
             frame #9: 0x000000000045bf61 test`runtime.goexit.abi0 + 1
```

The frame #7 is code of the Native Func, and the frame #0 is code of the Foreign Func. In this case, code of the frame #1 to the frame #6 that are between the frame #7 and the frame #0 is glue code. After the debugger runs the frame #7, the debugger needs to enter code at each layer from the frame #6 to the frame #1 through step-in, and finally enter the Foreign Func of the frame #0 through step-in by using the code of the frame #1.

The glue code of the frame #1 to the frame #6 is merely an example for description. Because function call logic of the glue code depends on a specific implementation, the glue code is usually more complex in actual application, and therefore a debugging process of the debugger also becomes more complex.

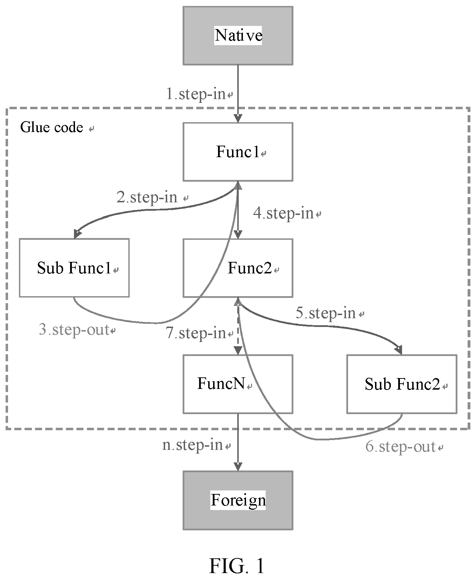

For ease of understanding, the following describes a current debugging process of a debugger by using an example with reference to the accompanying drawings. FIG. 1 is a schematic flowchart in which a debugger enters glue code through step-in. As shown in FIG. 1, when the debugger executes step-in on a Native Func, a first-layer function (Func1 in FIG. 1) in the glue code is first entered, and step-in is continuously executed. If the glue code includes a subfunction, step-in is executed to enter the subfunction. In this case, step-out (namely, step-out) needs to be executed, and then step-in/step-out, ..., and the like are executed. Therefore, a plurality of step-in/step-out operations are performed on the glue code to finally enter a Foreign Func from a last-layer function (FuncN in FIG. 1) in the glue code.

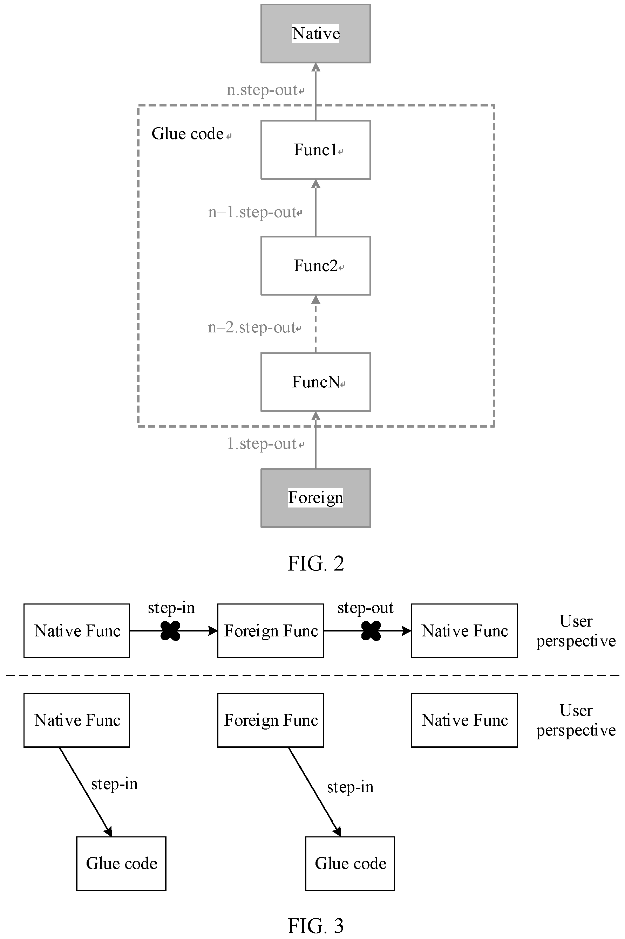

FIG. 2 is a schematic flowchart in which a debugger executes step-out in glue code. As shown in FIG. 2, when the debugger executes step-out from a Foreign Func, the debugger first returns to a last-layer function in the glue code, then executes step-out, ..., and the like, and finally returns to a Native Func after executing a plurality of times of step-out.

It can be learned from the foregoing that currently, when the debugger processes the glue code, a debugging process is complex, and efficiency is low. FIG. 3 is a diagram of a scenario in which a debugger processes glue code in the conventional technology. As shown in FIG. 3, from an internal perspective of processing the glue code by the debugger shown in FIG. 3, a plurality of step-in/step-out operations are required to enter a Foreign Func or return to a Native Func. In addition, from a user perspective of a developer, the debugger cannot enter the Foreign Func through step-in (step-in), or return to the Native Func through step-out (step-out).

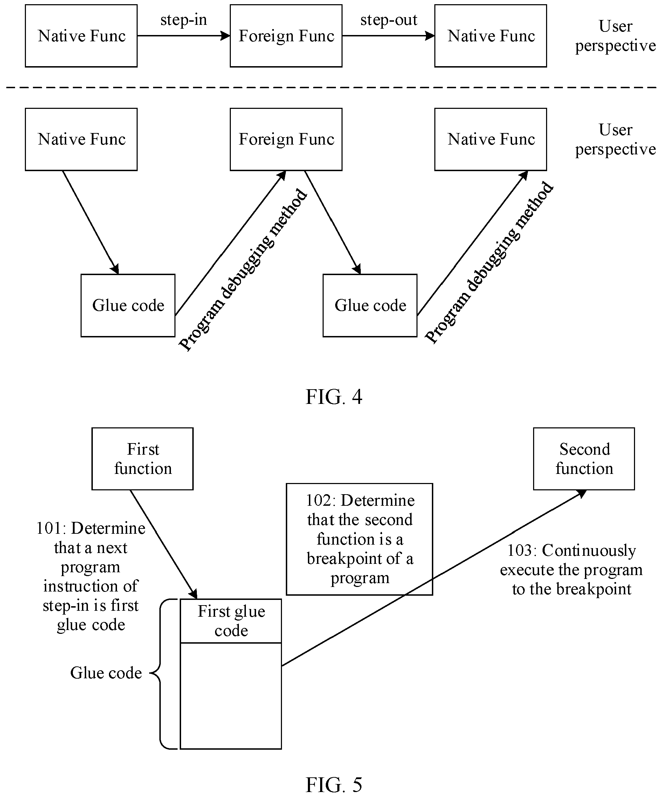

In view of this, embodiments of this application provide a program debugging method, a debugger, and a compute device, to improve program debugging efficiency. FIG. 4 is a diagram of a scenario in which a debugger processes glue code according to an embodiment of this application. As shown in FIG. 4, from an internal perspective of processing the glue code by the debugger shown in FIG. 4, when facing the glue code, the debugger may enter a Foreign Func or return to a Native Func by performing a program debugging method provided in embodiments of this application. In addition, from a user perspective of a developer, the program debugging method provided in embodiments of this application is equivalent to entering the Foreign Func through step-in (step-in) or returning to the Native Func through step-out (step-out).

The following describes the program debugging method in embodiments of this application. FIG. 5 is a schematic flowchart of a program debugging method according to an embodiment of this application. In FIG. 5, an example in which a debugger performs the program debugging method is used to illustrate the method. However, an execution body of the program debugging method is not limited in this application. For example, the debugger in FIG. 5 may alternatively be a chip, a chip system, or a processor that supports the debugger in implementing the method, or may be a logical node, a logical module, or software that can implement all or a part of functions of the debugger. As shown in FIG. 5, the program debugging method in this embodiment of this application includes but is not limited to step 101 to step 103.

101: The debugger determines that next program code of step-in is first glue code.

In a process of debugging a program by using a debugger, a developer usually chooses to manually step into (namely, step-in) functions (including glue code) at each layer of the program by using the debugger, to help the program developer view and analyze code status and behavior step by step during program execution, so as to help the developer diagnose and fix a code error, understand behavior of the program, and optimize performance. If step-in/step-out is continuously executed a plurality of times in the glue code, program debugging efficiency is greatly reduced.

In this embodiment of this application, the debugger can identify and determine the glue code in the program. Specifically, in this embodiment of this application, a first function is a caller function (equivalent to the foregoing Native Func), and a second function is a callee function (equivalent to the foregoing Foreign Func). The first function and the second function are obtained through compilation by using different compiled languages. For example, the first function is compiled by using a Go language, and the second function is compiled by using a C language. In this case, in a static compilation phase of the program, glue code needs to be written between the first function and the second function. The first glue code in this embodiment of this application is first-layer code in the glue code between the first function and the second function. Therefore, in this embodiment of this application, when the debugger prepares to execute a step-in operation on next program code in the program, the debugger can identify and determine in time that the next program code of the program is the first glue code (the first-layer code in the glue code).

Specifically, content of the glue code is written into the program in advance in the static compilation phase. Therefore, a function name of the glue code is predictable. For example, in the glue code, a name of a first-layer function and a name of a last-layer function are predictable. In this embodiment of this application, the debugger may first obtain the function name of the glue code (including a function name of the first glue code). When a function name corresponding to next program code of step-in (namely, step-in) of the debugger matches the function name of the first glue code, the debugger determines that the next program code of the program step-in is the first glue code.

In this embodiment of this application, a type of the debugger is not limited. For example, the debugger may be a DeBugger debugger, an IDE debugger, a JDK debugger, or another debugger. This is not specifically limited herein.

The program debugging method in this embodiment of this application is applicable to a cross-language call scenario. However, compiled languages used by the first function (the caller function) and the second function (the callee function) are not limited. For example, an Objective-C language, the Go language, or the C language may be used. This is not specifically limited herein.

102: The debugger determines that the second function is a breakpoint of the program.

Regardless of how the glue code is implemented, the second function (Foreign Func) needs to be finally called. Therefore, the debugger sets the second function as a breakpoint of the program. After the breakpoint is set, the debugger enables the program to run automatically. When the program runs to a specified breakpoint position, the program is suspended at the breakpoint position.

Specifically, to set the second function as the breakpoint of the program, the debugger needs to obtain an address (namely, a target address) at which the second function is stored. After obtaining the target address of the second function, the debugger sets the second function as the breakpoint by using the target address.

In actual application, before the Native Func enters the glue code through step-in (step-in), there is definitely a mechanism for storing the target address of the second function (Foreign Func). In this case, the debugger may also obtain the target address of the second function based on an implementation mechanism of the compiled language.

In a possible implementation, the target address of the second function is stored on a stack. In this case, the debugger obtains a stack pointer (Stack Pointer, SP), and the target address is an address indicated by the stack pointer and an offset. The second function may be obtained from the target address on the stack.

In a possible implementation, the target address of the second function is stored in a target variable. The debugger obtains the target variable, where a variable value of the target variable includes the target address of the second function.

103: The debugger continuously executes the program to the breakpoint.

If the debugger sets the second function as the breakpoint of the program, the debugger no longer executes step-in, but continuously executes the program to the set breakpoint. In the glue code between the first function and the second function, because the debugger does not execute step-in, the debugger does not enter a function (including a subfunction) of the glue code, and the developer does not need to manually operate a step-in command (step-in command) on the debugger. The program automatically runs until the breakpoint position (namely, the second function) is reached. Therefore, for an operation step of the developer, after the first function is entered, the second function is reached. Because the glue code between the first function and the second function automatically runs in the program, the developer does not perceive a running process of the glue code, and does not need to manually operate each function for running the glue code either. This improves program debugging efficiency.

The DeBugger debugger is used as an example. In actual application, a command used by the DeBugger debugger to perform "continuous execution" is a continue command. Therefore, in this embodiment of this application, after the debugger sets the second function as the breakpoint of the program, the DeBugger debugger executes the continue command, and the program automatically and continuously runs to the breakpoint position (namely, the second function).

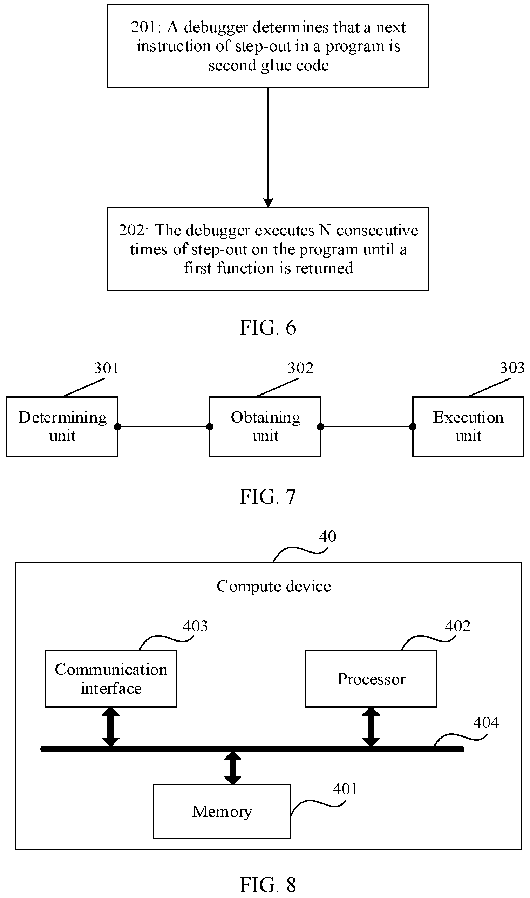

The program debugging method in this embodiment of this application may also be applied to returning from the callee function (the second function) to the caller function (the first function). FIG. 6 is another schematic flowchart of a program debugging method according to an embodiment of this application. In FIG. 6, an example in which a debugger performs the program debugging method is used to illustrate the method. However, an execution body of the program debugging method is not limited in this application. For example, the debugger in FIG. 6 may alternatively be a chip, a chip system, or a processor that supports the debugger in implementing the method, or may be a logical node, a logical module, or software that can implement all or a part of functions of the debugger. As shown in FIG. 6, the program debugging method in this embodiment of this application includes but is not limited to step 201 and step 202.

201: The debugger determines that next program code of step-out is second glue code.

It can be learned from the foregoing that, in a static compilation phase of a program, glue code needs to be written between a first function and a second function. First glue code is first-layer code in the glue code between the first function and the second function, and the second glue code in this embodiment of this application is last-layer code in the glue code between the first function and the second function. Therefore, in this embodiment of this application, when the debugger prepares to execute a step-out operation on next program code in the program, the debugger can identify and determine in time that the next program code is the second glue code (the last-layer code in the glue code).

202: The debugger executes N consecutive times of step-out on the program until the first function is returned.

Because subsequent to-be-executed code of the program is the glue code, in this embodiment of this application, the debugger may automatically execute the N consecutive times of step-out on the program until the first function is returned, where N is an integer greater than or equal to 2. Therefore, a developer does not need to manually initiate a step-out (step-out) operation on each layer of glue code in an operation interface of the debugger, thereby improving program debugging efficiency.

It can be learned from the foregoing that, in the glue code, a name of a first-layer function and a name of a last-layer function are predictable. In this embodiment of this application, the debugger may first obtain a function name of the glue code (including a function name of the second glue code). When a function name corresponding to next program code of step-out (namely, step-out) of the debugger matches the function name of the second glue code, the debugger determines that the next program code of the program step-out is the second glue code.

In a possible implementation, in a process in which the debugger executes N times of step-out to reach the first function, N-1 times of step-out in the glue code is first executed. In other words, the debugger executes, starting from the second function, N-1 consecutive times of step-out on the program until the first glue code is reached. Then, after executing one time of step-out at a position of the first glue code, the debugger can reach the first function. Specifically, the debugger executes N-1 consecutive times of step-out on the program. If a function name corresponding to a current to-be-executed instruction matches a function name of the first glue code, the debugger may determine that the first glue code has been returned.

Correspondingly, embodiments of this application further provide related apparatuses configured to implement the foregoing solution. Specifically, FIG. 7 is a diagram of a structure of a debugger according to an embodiment of this application. The apparatus may be a debugger, a component (for example, a processor, a chip, or a chip system) in the debugger, or a logical node, a logical module, or software that can implement all or a part of functions of the debugger. As shown in FIG. 7, the debugger includes a determining unit 301, an obtaining unit 302, and an execution unit 303.

The determining unit 301 is configured to determine that next program code of step-in is first glue code, where the first glue code is first-layer code in glue code between a first function and a second function, the first function calls the second function, and the first function and the second function are separately obtained through compilation by using different compiled languages.

The determining unit 301 is further configured to determine that the second function is a breakpoint of a program.

The execution unit 303 is configured to continuously execute the program to the breakpoint.

In a possible design, the determining unit 301 is further configured to determine that next program code of step-out is second glue code, where the second glue code is last-layer code in the glue code between the first function and the second function.

The execution unit 303 is further configured to execute N consecutive times of step-out on the program until the first function is returned, where N is an integer greater than or equal to 2.

In a possible design, the determining unit 301 is specifically configured to:
when a function name corresponding to the next program code of step-in matches a function name of the first glue code, determine that the next program code of step-in is the first glue code.

In a possible design, the determining unit 301 is specifically configured to:
when a function name corresponding to the next program code of step-out matches a function name of the second glue code, determine, by the debugger, that the next program code of step-out is the second glue code.

In a possible design, the execution unit 303 is specifically configured to:
execute N-1 consecutive times of step-out on the program until the first glue code is reached; and
execute one time of step-out based on the first glue code, to return to the first function.

In a possible design, the execution unit 303 is specifically configured to:
execute the N-1 consecutive times of step-out on the program; and
when a function name corresponding to a current to-be-executed instruction matches a function name of the first glue code, determine that the first glue code is reached.

In a possible design, the debugger further includes:
an obtaining unit 302, configured to obtain a target address of the second function, where the target address is used by the debugger to determine that the second function is the breakpoint.

In a possible design, the obtaining unit 302 is specifically configured to:
obtain a stack pointer SP; and
determine the target address of the second function based on an indication of the SP.

In a possible design, the obtaining unit 302 is specifically configured to:
obtain a target variable, where a variable value of the target variable includes the target address of the second function.

It should be noted that, content such as information exchange and an execution process between the modules/units in the debugger is based on a same concept as the method embodiment corresponding to FIG. 5 or FIG. 6 in this application. For specific content, refer to the descriptions in the foregoing method embodiments in this application. Details are not described herein again.

FIG. 8 is a diagram of a logical structure of a compute device 40 according to an embodiment of this application. The compute device 40 may be a debugger, a component (for example, a processor, a chip, or a chip system) in the debugger, or a logical node, a logical module, or software that can implement all or a part of functions of the debugger. The debugger described in the embodiment corresponding to FIG. 7 may be deployed on the compute device 40, and is configured to implement a function implemented by the debugger in the embodiment corresponding to FIG. 5 or FIG. 6. The computer device 40 includes a memory 401, a processor 402, a communication interface 403, and a bus 404. The memory 401, the processor 402, and the communication interface 403 are communicatively connected to each other through the bus 404.

The memory 401 may be a read-only memory (read-only memory, ROM), a static storage device, a dynamic storage device, or a random access memory (random access memory, RAM). The memory 401 may store a program. When the program stored in the memory 401 is executed by the processor 402, the processor 402 and the communication interface 403 are configured to perform steps 101 to 103 in the foregoing data processing method embodiment.

The processor 402 may be configured to execute a related program by using a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or any combination thereof, to implement one or more of steps 101 to 103 in the data processing method embodiment in this application. The steps of the data processing method disclosed with reference to embodiments of this application may be performed by a compiler and an executor. The compiler and the executor may be performed and completed by a hardware decoding processor, or may be performed and completed by a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is in the memory 401. The processor 402 reads information in the memory 401, to perform one or more of steps 101 to 103 in the data processing method embodiment in this application in combination with hardware of the processor 402.

The communication interface 403 uses a transceiver apparatus, for example but not limited to, a transceiver, to implement communication between the computer device 40 and another device or a communication network.

The bus 404 may implement a channel for transferring information between various components (for example, the memory 401, the processor 402, and the communication interface 403) of the computer device 40. The bus 404 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, or the like. For ease of representation, only one bold line is used for representation in FIG. 8, but this does not mean that there is only one bus or only one type of bus.

It should be noted that, content such as information exchange and an execution process between the modules/units in the compute device is based on a same concept as the method embodiment corresponding to FIG. 5 or FIG. 6 in this application. For specific content, refer to the descriptions in the foregoing method embodiments in this application. Details are not described herein again.

An embodiment of this application further provides a computer program product including instructions. The computer program product may be software or a program product that includes the instructions and that can run on a compute device or can be stored in any usable medium. When the computer program product runs on at least one computer device, the at least one computer device is enabled to perform the method described in the embodiment shown in FIG. 5 or FIG. 6.

An embodiment of this application further provides a computer-readable storage medium. The computer-readable storage medium may be any usable medium accessible by a compute device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the compute device to perform the method described in the embodiment shown in FIG. 5 or FIG. 6.

The communication apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the method described in the embodiment shown in FIG. 5 or FIG. 6. Optionally, the storage unit is a storage unit in the chip, for example, a register or a cache. Alternatively, the storage unit may be a storage unit that is in a radio access device end and that is located outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, may be located at one position, or may be distributed on a plurality of network units. A part or all of the modules may be selected based on actual needs to achieve the objectives of the solutions of embodiments. In addition, in the accompanying drawings of the apparatus embodiments provided in embodiments of this application, connection relationships between modules indicate that the modules have communication connections with each other, which may be specifically implemented as one or more communication buses or signal cables.

Based on the descriptions of the foregoing implementations, a person skilled in the art may clearly understand that embodiments of this application may be implemented by using software in addition to necessary universal hardware, or may be implemented by using dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for embodiments of this application, a software program implementation is a better implementation in most cases. Based on such an understanding, the technical solutions in embodiments of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or a part of the foregoing embodiments may be implemented by using software, hardware, firmware, or any combination thereof. When software is used to implement embodiments, all or a part of the embodiments may be implemented in a form of computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, like a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A program debugging method, wherein the method comprises:
determining, by a debugger, that next program code of step-in is first glue code, wherein the first glue code is first-layer code in glue code between a first function and a second function, the first function calls the second function, and the first function and the second function are separately obtained through compilation by using different compiled languages;
determining, by the debugger, that the second function is a breakpoint of the program; and
continuously executing, by the debugger, the program to the breakpoint.

2. The method according to claim 1, wherein the method further comprises:
determining, by the debugger, that next program code of step-out is second glue code, wherein the second glue code is last-layer code in the glue code between the first function and the second function; and
executing, by the debugger, N consecutive times of step-out on the program until the first function is returned, wherein N is an integer greater than or equal to 2.

3. The method according to claim 1 or 2, wherein determining, by the debugger, that the next program code of step-in is the first glue code comprises:
if a function name corresponding to the next program code of step-in matches a function name of the first glue code, determining, by the debugger, that the next program code of step-in is the first glue code.

4. The method according to claim 2, wherein determining, by the debugger, that the next program code of step-out is the second glue code comprises:
if a function name corresponding to the next program code of step-out matches a function name of the second glue code, determining, by the debugger, that the next program code of step-out is the second glue code.

5. The method according to claim 2 or 4, wherein executing, by the debugger, the N consecutive times of step-out on the program until the first function is returned comprises:
executing, by the debugger, N-1 consecutive times of step-out on the program until the first glue code is reached; and
executing, by the debugger, one time of step-out based on the first glue code, to return to the first function.

6. The method according to claim 5, wherein executing, by the debugger, the N-1 consecutive times of step-out on the program until the first glue code is reached comprises:
executing, by the debugger, the N-1 consecutive times of step-out on the program; and
if a function name corresponding to a current to-be-executed instruction matches a function name of the first glue code, determining, by the debugger, that the first glue code is reached.

7. The method according to any one of claims 1 to 6, wherein the method further comprises:
obtaining, by the debugger, a target address of the second function, wherein the target address is used by the debugger to determine that the second function is the breakpoint.

8. The method according to claim 7, wherein the target address of the second function is stored on a stack, and obtaining, by the debugger, the target address of the second function comprises:
obtaining, by the debugger, a stack pointer SP; and
determining, by the debugger, the target address of the second function based on an indication of the SP.

9. The method according to claim 7, wherein the target address of the second function is stored in a target variable, and obtaining, by the debugger, the target address of the second function comprises:
obtaining, by the debugger, the target variable, wherein a variable value of the target variable comprises the target address of the second function.

10. A debugger, wherein the debugger comprises:
a determining unit, configured to determine that next program code of step-in is first glue code, wherein the first glue code is first-layer code in glue code between a first function and a second function, the first function calls the second function, and the first function and the second function are separately obtained through compilation by using different compiled languages, wherein
the determining unit is further configured to determine that the second function is a breakpoint of the program; and
an execution unit, configured to continuously execute the program to the breakpoint.

11. The debugger according to claim 10, wherein
the determining unit is further configured to determine that next program code of step-out is second glue code, wherein the second glue code is last-layer code in the glue code between the first function and the second function; and
the execution unit is further configured to execute N consecutive times of step-out on the program until the first function is returned, wherein N is an integer greater than or equal to 2.

12. The debugger according to claim 10 or 11, wherein the determining unit is specifically configured to:
when a function name corresponding to the next program code of step-in matches a function name of the first glue code, determine that the next program code of step-in is the first glue code.

13. The debugger according to claim 11, wherein the determining unit is specifically configured to:
when a function name corresponding to the next program code of step-out matches a function name of the second glue code, determine, by the debugger, that the next program code of step-out is the second glue code.

14. The debugger according to claim 11 or 13, wherein the execution unit is specifically configured to:
execute N-1 consecutive times of step-out on the program until the first glue code is reached; and
execute one time of step-out based on the first glue code, to return to the first function.

15. The debugger according to claim 14, wherein the execution unit is specifically configured to:
execute the N-1 consecutive times of step-out on the program; and
when a function name corresponding to a current to-be-executed instruction matches a function name of the first glue code, determine that the first glue code is reached.

16. The debugger according to any one of claims 10 to 15, wherein the debugger further comprises:
an obtaining unit, configured to obtain a target address of the second function, wherein the target address is used by the debugger to determine that the second function is the breakpoint.

17. The debugger according to claim 16, wherein the obtaining unit is specifically configured to:
obtain a stack pointer SP; and
determine the target address of the second function based on an indication of the SP.

18. The debugger according to claim 16, wherein the obtaining unit is specifically configured to:
obtain a target variable, wherein a variable value of the target variable comprises the target address of the second function.

19. A compute device, comprising a processor, wherein the processor is coupled to a memory, wherein
the memory is configured to store instructions; and
the processor is configured to execute the instructions in the memory, so that the compute device performs the method according to any one of claims 1 to 9.

20. A computer-readable storage medium, wherein the computer-readable storage medium stores a computer program, and when the computer program is executed by a processor, the method according to any one of claims 1 to 9 is implemented.

21. A computer program product, wherein the computer program product stores computer-readable instructions, and when the computer-readable instructions are executed by a processor, the method according to any one of claims 1 to 9 is implemented.
